# EUROPÄISCHE PATENTANMELDUNG

(11) **EP 3 970 913 A1**
(43) Veröffentlichungstag der Anmeldung: **23.03.2022**
(21) Anmeldenummer: 20196771.8
(22) Anmeldetag: 17.09.2020
(51) Int. Cl.: B23Q 17/09, B23Q 17/22, G05B 19/404

(54) **VERFAHREN ZUR SPANABHEBENDEN FERTIGUNG VON STRUKTUREN AUF WERKSTÜCKOBERFLÄCHEN SOWIE BEARBEITUNGSMASCHINE**

(30) Priorität: 16.09.2020 EP 20196557
(71) Anmelder: Fraunhofer-Gesellschaft zur Förderung der angewandten Forschung e.V., 80686 München (DE)
(72) Erfinder: ZONTAR, Daniel, 52074 Aachen (DE); KOSEL, Maximilian, 52074 Aachen (DE)
(74) Vertreter: Naeven, Ralf

(57) **Zusammenfassung**

Es wird ein Verfahren zur spanabhebenden Fertigung von Strukturen auf Werkstückoberflächen vorgeschlagen, bei dem während eines an einem Werkstück (4) durchgeführten Zerspanungsprozesses entstehender Körperschall mittels mindestens eines Schallsensors (5) gemessen wird und Sensorausgangssignale des mindestens einen Schallsensors (5) für eine Regelung der Zustellung eines Werkzeuges (3) am Werkstück (5) genutzt werden. Des Weiteren wird vorgeschlagen, zur Bestimmung einer Lage und/oder der Geometrie eines Werkzeuges (3) das Werkzeug (3) derart entlang einer von einem Referenzwerkzeug in einem Referenzwerkstück (10) erzeugten Referenzstruktur (11) verfahren wird, dass das Werkzeug (3) auf die Referenzstruktur (11) lateral begrenzendes Material spanabhebend einwirkt, ein während des Verfahrens des Werkzeuges (3) entstehender Körperschall mittels mindestens eines Schallsensors (5) gemessen wird und unter Nutzung von Sensorausgangssignalen die Lage des Werkzeugs (3) relativ zur Referenzstruktur (11) festgestellt wird.

Schließlich wird eine Bearbeitungsmaschine zur Durchführung des Verfahrens vorgestellt.

## Beschreibung

Die Erfindung betrifft ein Verfahren zur spanabhebenden Einarbeitung von Strukturen auf Werkstückoberflächen sowie eine Bearbeitungsmaschine gemäß dem Oberbegriff des Anspruchs 9.

Die maschinelle spanabhebende Fertigung von feinen Strukturen auf Werkstückflächen ist im Stand der Technik inzwischen in der Regel unproblematisch, wenn die Strukturen hinsichtlich ihrer Abmessungen und Genauigkeiten im einstelligen Mikrometerbereich sein sollen. Sollen die Strukturen hingegen Abmessungen und/oder Genauigkeiten im Submikrometerbereich aufweisen ist der Aufwand hoch. Zwar existieren geeignete Werkzeuge zur spanabhebenden Bearbeitung, z.B. Diamantwerkzeuge, die eine für Submikrometerstrukturen und Submikrometergenauigkeiten hinreichend genau definierte Geometrie aufweisen. Auch Maschinenachsen weisen inzwischen eine Positionsauflösung im Nanometerbereich auf. Jedoch zeigt sich in der Praxis, dass in der Regel bei versuchten ultrapräzisen Bearbeitungen, z.B. von rotierenden, walzenförmigen Werkstücken, Schnittunterbrechungen auftreten, die auf verschiedene Umwelteinflüsse zurückgeführt werden können.

Es ist problematisch, bei ultrapräzisen Fertigungsschritten eine geeignete Regelung der Werkzeugzustellung vorzusehen, welche die als Störgrößen wirkenden vorgenannten Umwelteinflüsse kompensiert. Ein großes Hindernis für die Regelung ist, dass während des Zerspanungsprozesses mit bekannten Messmethoden in der Regel keine hinreichend genauen Informationen über die Relativposition der Werkzeugschneide zur Werkstückoberfläche und damit über die tatsächliche Schnitttiefe erhalten werden können. Optische Systeme können aufgrund spiegelnder Oberflächen und/oder den Schmierstoffen und Spänen nicht sinnvoll als Messmittel verwendet werden. Des Weiteren scheitern Messungen mit optischen Systemen mitunter an den geometrischen Verhältnissen am Punkt des direkten Schneideneingriffs.

Ein weiteres Problem ist die Bestimmung der korrekten Werkzeuglage und/oder Werkzeuggeometrie, insbesondere dann, wenn nach Fertigung eines Teils der gewünschten Strukturen bei festgestellter Abnutzung oder Beschädig das Werkzeug ersetzt werden muss. Mit der Werkzeuglage ist sowohl seine Position als auch seine Ausrichtung innerhalb der Bearbeitungsmaschine gemeint. Gerade für die ultrapräzise Bearbeitung kann der Austausch des Werkzeuges kritisch sein, da auch minimale Unterschiede zwischen der Geometrie und/oder der Position oder Ausrichtung in einem Werkzeughalter gravierende Auswirkungen haben können. Für die Fertigstellung von Strukturen, insbesondere im ultrapräzisen Bereich, die eine großflächige Bearbeitung gehören somit die dargestellten Probleme eng zusammen.

Aus der US 4,709,798 A ist eine Steuerung für eine spanabhebende Bearbeitung, z.B. für Metallwerkstücke, bekannt, bei der Körperschall ausgewertet wird. Hierfür wird ein Schallsensor am Arbeitstisch angebracht. Das vom Sensor aufgenommene Signal wird in mehreren Stufen, nämlich mittels eines Bandpassfilters, einer Gleichrichterschaltung, einer Spitzenwerteerfassung und einer Glättungseinheit, verarbeitet. Die auf diese Weise festgestellte Stärke oder Amplitude der Schallemission wird mit den Bearbeitungszustand am Werkstück verglichen. Die Vorschubgeschwindigkeit des Werkzeuges, z.B. einer Fräse, kann anhand der festgestellten Ausgangssignale des Sensors und der damit korrelierten Bearbeitungszustände gesteuert werden. Wird z.B. eine unerwünscht hohe Last am Bearbeitungswerkzeug festgestellt, kann die Vorschubgeschwindigkeit erniedrigt werden. Es wird nicht ersichtlich, dass es mit dieser auf die Last am Bearbeitungswerkzeig abstellenden Regelung möglich ist, die Bearbeitungsbedingungen am Werkstück, insbesondere die Schnitttiefe, zu quantifizieren und damit die Zustellung des Werkzeuges zu regeln.

Die EP 1797992 A1 offenbart ebenfalls ein Verfahren und eine Vorrichtung zur spanabhebenden Bearbeitung, bei denen Körperschall eingesetzt wird, um möglichst präzise diverse Parameter zu bestimmen, wie z.B. Werkzeugabmessungen und Werkzeugform, Spindelrundlauf und Orte auf der Oberfläche des Werkstückes. Die erfassten Parameter werden zur Steuerung des Bearbeitungsvorgangs eingesetzt. Im konkreten Beispiel wird ein sich drehendes Werkzeug, z.B. eine Fräse, in Kontakt mit der Werkstückoberfläche gebracht. Der dabei entstehende Körperschall wird mittels eines am Werkstück angebrachten Sensors detektiert und verarbeitet. Der Beginn des Körperschalls kann dann den Moment bestimmen, zu dem ein Bohrloch die Tiefe Null aufweist. Die genaue Ausrichtung des Werkzeugs zur Werkstückoberfläche kann durch mehrfaches Antasten und Körperschallmessungen an verschiedenen Orten auf der Oberfläche festgestellt werden. Es werden keine Ansätze genannt, die tatsächlichen Bearbeitungsparameter, wie z.B. die Schnitttiefe zu bestimmen. Die Verwertung des Körperschalls erfolgt analytisch. Hinsichtlich der zu erreichenden Genauigkeit der Bearbeitung wird der Mikrometerbereich angegeben.

Gemäß der WO 2010/061061 A1 wird für ein System und eine Vorrichtung zur Erhöhung der Effizienz der Maschinenbearbeitung vorgeschlagen, mehrere Signale zu messen und Schnittbedingungen in Bezug auf die aufgenommenen Signale zu analysieren. Anschließend wird ein Zusammenhang zwischen den gemessenen Signalen und den Schnittbedingungen hergeleitet. Auf der Grundlage des hergeleiteten Zusammenhangs werden während der zerspanenden Bearbeitung Prozessvariablen in Echtzeit in Richtung einer optimalen Schnittsituation angepasst. Bei den zu messenden Signalen kann es sich um akustische Emissionen, Werkzeugbeschleunigung, Vibrationen, Werkzeugverschleiß oder die für den Schneidvorgang eingesetzte Leistung handeln. Als Parameter können Schneidgeschwindigkeit und Vorschub geregelt werden. Das System kann selbstlernend, z.B. basierend auf künstlicher Intelligenz, eingerichtet sein. So kann die Herleitungsmethode auf Fuzzylogic basieren. Eine Aussage zum Bereich der erreichbaren Bearbeitungsgenauigkeit gibt es nicht.

Aus der US 2008/0105094 A1 ist ein Steuerungsverfahren für ein Maschinenwerkzeug bekannt, bei dem Signale verschiedener Sensoren genutzt werden, um Zustände des rotierenden Werkzeuges festzustellen, z.B. Vibrationssensoren, Temperatursensoren, Dehnungsmessstreifen, piezoelektrische Elemente oder Mikrofone für den Körperschall. Es wird offenbart, dass ein neuronales Netzwerk genutzt werden kann, um die Daten eines oder mehrerer Sensoren zu kombinieren, welche mehr als einen Parameter messen, und zu interpolieren, wann ein Bruch des Werkzeuges zu erwarten ist.

Aus der US 7,341,410 B2 sind eine Bearbeitungsmaschine und ein Verfahren zu ihrem Betrieb bekannt, bei denen an einem nicht rotierenden Teil der Maschine in der Nähe des Werkzeuges Schwingungssignale aufgenommen werden, aus denen sogenannte Signaturgrößen berechnet werden, welche die Dynamik des Schwingungssignals charakterisieren. Diese Signaturgrößen werden korreliert, um Parameter festzustellen, welche mit dem Betrieb der Bearbeitungsmaschine assoziiert sind. Damit soll es möglich sein, zum Beispiel die Beschaffenheit der Werkstückoberfläche, einen hinreichenden Fluss von Abkühlungsmittel und/oder die verbleibende Lebensdauer des Werkzeugs festzustellen.

Um Strukturen im Submikrometerbereich oder mit Submikrometergenauigkeit mit zerspanenden Methoden in Werkstückoberflächen einarbeiten zu können muss nach allgemein bekanntem Stand der Technik ein Maschinenbediener das zu bearbeitende Werkstück mit einem finalen Konturwerkzeug ankratzen. Hierfür wird eine hochauflösende Kamera installiert und die Zustellung anschließend so lange erhöht, bis ein Span abgehoben wird. Dieser Punkt wird als Nullpunkt der Bearbeitung gewählt, liegt jedoch tatsächlich bereits leicht im Material.

Typischerweise wird die Maschinenachse beim Ankratzen in Schritten von 200 nm verfahren, was für konventionelle Strukturen auf einer Größenordnung von einigen 10 µm ausreichend ist. Sind das Ziel jedoch Strukturdetails von unter 1 µm Größe, liegt der so erzeugte Fehler in der Strukturtiefe im zweistelligen Prozentbereich. Da - wie bereits erwähnt - eine direkte Vermessung der Zustellung während des Bearbeitungsprozesses bisher nicht möglich ist, stellt die aktive Zustellungskompensation zur Erzeugung von Submikrometerstrukturen oder Strukturen mit Submikrometergenauigkeit eine neue technische Herausforderung im Bereich der Zerspanungstechnik dar.

Nach aktuellem Stand der Forschung lassen sich aufgrund der unstetigen Langzeitstabilität des Drehprozesses nur Submikrometerstrukturen in einzelnen Ringen von ca. 10 mm Breite erzeugen, da ein kontinuierlicher Schnitt nicht möglich ist. Liu et. al. (Liu, C.-W.; Yan, J.; Lin, S.-C.: "Diamond turning of high-precision roll-to-roll imprinting molds for fabricating subwavelength gratings" in: Optical Engineering. Jg. 55, 2016, Nr. 6, S. 64105) stellten 2016 eine Veröffentlichung vor, in der an einem walzenförmigen Werkstück Strukturen unter 1 µm Größe hergestellt werden konnten.

Hierfür wurden die Umgebungsbedingungen während des Bearbeitungsprozesses kontrolliert und möglichst konstant gehalten. Aus den Daten der Umgebungsbedingungen wurden keine Werte herangezogen, um den Bearbeitungsprozess zur Kompensation eventueller Änderungen dieser Umgebung Bedingungen zu beeinflussen. Erst nach erfolgter Bearbeitung der Walze war feststellbar, dass die erzeugten Strukturen nicht die gewünschte Tiefe hatten.

Der Erfindung liegt das technische Problem zugrunde, ein Verfahren sowie eine Bearbeitungsmaschine der eingangs genannten Art zur Verfügung zu stellen, welche es erlauben, die Strukturen mit Submikrometerabmessungen und/oder Submikrometergenauigkeiten zuverlässig, vorzugsweise auch auf großen Oberflächenbereichen, ohne Schnittunterbrechung einzuarbeiten. Große Oberflächenbereiche sind dabei solche, die in ihren Erstreckungsrichtungen mindestens 20 mm betragen und idealerweise nach oben lediglich durch die Lebensdauer des Werkzeuges oder durch Wirtschaftlichkeitsbetrachtungen beschränkt sind.

Das technische Problem wird bei Verfahren der eingangs genannten Art mit den Merkmalen des Anspruchs 1 und/oder den Merkmalen des Anspruchs 2 gelöst und bei einer Bearbeitungsmaschine der eingangs genannten Art mit den kennzeichnenden Merkmalen des Anspruchs 9 gelöst. Vorteilhafte Ausführungsformen für Verfahren und Bearbeitungsmaschine ergeben sich aus den abhängigen Ansprüchen

Zum einen wird der während eines an einem Werkstück durchgeführten Zerspanungsprozesses entstehende Körperschall mittels mindestens eines Schallsensors gemessen und Sensorausgangssignale des mindestens einen Schallsensors werden für eine Regelung der Zustellung eines Werkzeuges am Werkstück genutzt.

Anders als im beschriebenen Stand der Technik, bei dem der Körperschall zur Zustandsfeststellung verwendet wird, um z.B. die verbleibende Lebensdauer des Werkzeuges oder die Oberflächenrauheit des bearbeiteten Werkstückes zu bestimmen, oder um eine Vorschubgeschwindigkeit zu regeln, wird gemäß der Erfindung der Körperschall zur Regelung der Zustellung des Werkzeugs eingesetzt. Es konnte festgestellt werden, dass der im Prozess messbare Körperschall insbesondere mit der Schnitttiefe des Werkzeuges im Werkstück korreliert und zwar auch im Bereich der ultrapräzisen Fertigung, bei der Werkstücke mit feinsten Bearbeitungsschneiden oder Bearbeitungsspitzen zumindest Bereichsweise nur mit einer Tiefe im Submikrometerbereich, bis hinunter zum einstelligen Nanometerbereich, in das Werkstück eindringen. Die Schnitttiefe ist wiederum durch die Zustellung des Werkzeuges bestimmt, weshalb die Korrelation zwischen den Sensorausgangssignalen oder aus den Sensorausgangssignalen generierten Zwischensignalen und der Schnitttiefe genutzt werden kann, die Werkzeugzustellung zu regeln. Bei bekannter Korrelation kann die tatsächliche Eingriffstiefe des Werkzeugs im Material aus den ausgewerteten Körperschalldaten berechnet werden, um die entsprechende Abweichung von Ist-Zustellung zu Soll-Zustellung als Offset-Signal auf eine für die Zustellung zuständige Maschinenachse aufzuschalten.

Da die Zustellung des Werkzeugs während der Bearbeitung hochgenau geregelt werden kann und damit die bei der Bearbeitung erzeugten Schnitttiefen bekannt sind, stehen nach der Bearbeitung die absoluten Geometrien der gefertigten Strukturen relativ zum restlichen Werkstück oder relativ zur direkten lokalen Umgebung der Struktur fest. Dies ist ein weiterer Vorteil der erfindungsgemäßen Verfahrensweise. Beim dargestellten Stand der Technik können mittels der Erfassung der Körperschalldaten z.B. Rauheiten der gefertigten Flächen ermittelt werden, die jedoch lediglich eine nicht geometriebestimmende Größe darstellt.

Das erfindungsgemäße Verfahren wird bevorzugt an großen Werkstückoberflächen durchgeführt. Große Werkstückoberfläche sind solche, die in mindestens zwei Erstreckungsrichtungen, zu denen auch eine Erstreckung entlang eines runden Werkstückumfangs gehören kann, mindestens 20 mm, vorzugsweise mindestens 50 mm, weiter vorzugsweise mindestens 10 cm beträgt. Gerade bei derartigen Werkstückoberfläche, die auch um Größenordnungen größer sein können, ermöglicht das erfindungsgemäße Verfahren eine Bearbeitung über entsprechend lange Strecken ohne Schnittunterbrechung im ultrapräzisen Bereich, d. h. eine Bearbeitung mit Abmessungen und/oder Genauigkeiten der zu fertigenden Strukturen im Submikrometerbereich. Die Werkstückoberflächen können zum Beispiel zylinderförmig, beispielsweise bei walzenförmigen Werkstücken, oder eben sein.

Ganz wesentlich hängt der Erfolg der spanabhebenden Bearbeitung, insbesondere im ultrapräzisen Bereich, von der genauen Kenntnis der Werkzeuglage in der Bearbeitungsmaschine, das heißt mit seiner genauen Position und Ausrichtung relativ zu den Maschinenachsen, und möglicherweise auch von der Kenntnis der Werkzeuggeometrie ab. Insbesondere, wenn die Fertigung der Strukturen unterbrochen werden muss, z.B. weil das bisherige Werkzeug schadhaft geworden ist oder ein Schaden aufgrund bereits langer Einsatzzeit zu erwarten ist, muss gewährleistet sein, dass ein neues Werkzeug mit der erforderlichen Genauigkeit in das Werkstück eingreifen und die Fertigung der Strukturen fortsetzen kann.

Erfindungsgemäß wird zur Bestimmung einer Lage und/oder der Geometrie eines Werkzeuges das Werkzeug entlang einer von einem Referenzwerkzeug in einem Referenzwerkstück erzeugten Referenzstruktur verfahren. Das Referenzwerkzeug kann z. B. das zuvor während der Fertigung eingesetzte Werkzeug oder ein sonstiges Referenzwerkzeug sein. Die Referenzstruktur kann z.B. nutförmig sein, insbesondere eine V-Nut sein.

Während des Verfahrens des Werkzeuges wirkt dieses auf Material spanabhebend ein, welches die Referenzstruktur lateral begrenzt. Eine laterale Begrenzung meint eine Begrenzung in einer Richtung orthogonal zur Zustellung. Ein dabei während des Verfahrens des Werkzeuges entstehender Körperschall wird mittels mindestens eines Schallsensors gemessen. Die Sensorausgangssignale werden genutzt, die Lage des Werkzeugs relativ zur Referenzstruktur festzustellen. Aus den Körperschallsignalen kann festgestellt werden, wann das Werkzeug die Referenzstruktur durchfährt und wann das Werkzeug die lateralen Seitenbegrenzungen verlässt oder in sie hineintritt. Anhand der bekannten Geometrie und Lage der Referenzstruktur im Zusammenhang mit den Körperschallsignalen kann die Lage und/oder die Geometrie des Werkzeuges festgestellt werden.

Das erfindungsgemäße Verfahren kann vorteilhaft so ausgeführt werden, dass das Werkzeug pendelnd entlang der Referenzstruktur verfahren wird. Die Pendelbewegung bewirkt, dass das Werkzeug mindestens einmal die Referenzstruktur kreuzt und mindestens zwei einander gegenüberliegende Begrenzungen der Referenzstruktur durchläuft. Die Pendelbewegung kann dabei so sein, dass das Werkzeug in lateraler Richtung im Mikrometerbereich in das Material der Begrenzungen der Referenzstruktur hineinfährt.

Die Zustellung des Werkzeuges während des vorgenannten Verfahrens zur Bestimmung der Lage und/oder der Geometrie des Werkzeuges kann gemäß dem erfindungsgemäßen Verfahren des Anspruchs 1 geregelt werden. Somit können die erfindungsgemäßen Verfahren nach Anspruch 1 und Anspruch 2 in besonders vorteilhafter Weise kombiniert durchgeführt werden. Dabei kann vorgesehen werden, dass das Werkzeug auch innerhalb der Referenzstruktur in das Referenzwerkstück-Material am Boden oder Grund der Referenzstruktur eingreift. Letzteres ist jedoch nicht zwingend. Wird auf einen ständigen Eingriff in das Referenzwerkstück-Material verzichtet, kann das Werkstück bei seiner Bewegung auch zeitweise ohne Kontakt zum Referenzwerkstück sein.

Das erfindungsgemäße Verfahren kann so ausgeführt werden, dass der Schallsensor oder mindestens einer der Schallsensoren am Werkzeug angebracht wird. Dies gilt sowohl für die Regelung der Zustellung als auch für die Bestimmung einer Lage und/oder der Geometrie des Werkzeuges. Schallsensoren, z.B. passiv piezoelektrische AE-Sensoren oder sonstige Sensoren für akustische Emissionen, können sehr klein ausgefertigt werden und somit unmittelbar auf einem Werkzeug, zum Beispiel auf einen mit einer Schneide oder einer Bearbeitungsspitze versehenen Diamanten, angebracht werden. Durch die Nähe des Schallsensors zum Bearbeitungsort können auch bei den für Submikrometerstrukturen geringen Schnitttiefen hinreichende Schallsignale gemessen werden, von denen das Spektrum und/oder die Amplituden genutzt werden.

Denkbar wäre es, die Sensorausgangssignale sowohl für die Regelung der Zustellung als auch für die Bestimmung der Lage und/oder der Geometrie des Werkzeuges analytisch zu verarbeiten und aus daraus ermittelten Korrelationen die Regelung der Werkzeugzustellung durchzuführen. Eine analytische Verarbeitung ist allerdings mit hohem Aufwand verbunden.

Es kann vorteilhaft sein, das erfindungsgemäße Verfahren so auszuführen, dass zur Ermittlung einer Korrelation zwischen den Sensorausgangssignalen oder aus den Sensorausgangssignalen generierten Zwischensignalen und einer Schnitttiefe des Werkzeuges am Werkstück künstliche Intelligenz eingesetzt wird. Künstliche Intelligenz kann auch für die Verarbeitung der Körperschallsignale in Bezug auf die Bestimmung der Lage und/oder der Geometrie des Werkzeuges eingesetzt werden.

Insbesondere kann es vorteilhaft sein, dass für die künstliche Intelligenz ein neuronales Netzwerk eingesetzt wird. Im Falle der Regelung der Zustellung ist das neuronale Netzwerk Bestandteil einer Regeleinheit, die im Folgenden kurz neuronaler Regler genannt wird. Ein neuronales Netzwerk ist in der Lage, den Zusammenhang zwischen den Sensorausgangssignalen und bestimmten Bearbeitungsparametern, insbesondere die Schnitttiefe des Werkzeugs, einzulernen. Hierfür kann für eine Kalibrierung des neuronalen Reglers in einem bestimmten Bereich des Werkstückes oder auf einem gesonderten Werkstück von vorzugsweise gleicher Bauart ein Bearbeitungsprozess durchgeführt werden. Die durch anderweitige Messmethoden, wie z.B. mittels Mikroskopie, konvokaler oder interferometrischer Messung festgestellten Schnitttiefen werden den ermittelten Sensorausgangssignalen zugeordnet. Die Zuordnung kann z.B. über die bekannten Achspositionen der Bearbeitungsmaschine bei der Aufnahme der Sensorausgangssignale und der Schnitttiefenmessung erfolgen. Die Feststellung der Korrelation der Schnitttiefen zu den registrierten Sensorausgangssignalen, welche z.B. Schallspektren abbilden, oder zu den durch Verarbeitung der Sensorausgangssignale erzeugten Zwischensignale erfolgt durch Training des neuronalen Netzwerkes. Somit kann der Körperschall als Messgröße für den Regelkreis dienen.

Für die Bestimmung der Lage und/oder der Geometrie des Werkzeuges kann das neuronale Netzwerk des neuronalen Reglers genutzt werden. Es kann aber auch eine von einer Regeleinheit unabhängige künstliche Intelligenz genutzt werden.

Geeignete Architekturen von neuronalen Netzwerken bieten zum Beispiel Frameworks wie Tensorflow an. Eine mögliche Umsetzung nimmt als Eingangsvektor 100 Amplituden je Millisekunde für einen Bereich von 10 ms aus der FFT (Fast Fourier Transformation) des Körperschallsignals, damit 1000 Werte. Über vier versteckte Ebenen, mit 100, 50, 100, 10 Knoten, wird dann auf einen Ausgang die Zustellung in Mikrometer durch Regression trainiert.

Von besonderer Relevanz für das erfindungsgemäße Verfahren zur Erzeugung von funktionalen Nanostrukturen sind Geometrien, welche sich mit spitzen Werkzeugen erzeugen lassen. Trotz einer im Vergleich zu nichtspitzen Werkzeugen, also solchen mit definierter Schneide, deutlich niedrigeren Amplitude der Körperschallsignale konnte überraschenderweise bei verschiedenen Zustellungen der spitzen Werkzeuge im relevanten Frequenzband ein Unterschied der messbaren Schallsignale festgestellt werden, so dass bei Einsatz der künstlichen Intelligenz ein für eine Regelung hinreichender Zusammenhang zwischen den Schallsignalen und der Zustellung gegeben ist.

Bevorzugt werden für das erfindungsgemäße Verfahren Werkzeuge mit definierten Schneiden oder Bearbeitungsspitzen aus einem Diamantmaterial eingesetzt.

Das erfindungsgemäße Verfahren kann des Weiteren auch so ausgeführt werden, dass eine Korrelation zwischen den Sensorausgangssignalen oder aus den Sensorausgangssignalen generierten Zwischensignalen und einem einen Zustand des Werkzeuges definierenden Parameter ermittelt wird.

Neben der Schnitttiefe kann auch der Zustand des Werkzeuges Einfluss auf den bei der Bearbeitung erzeugten Körperschall haben. Verändert sich zum Beispiel die Geometrie des in das Werkstück eingreifenden Teils des Werkzeugs, wird hierdurch - auch während der Fertigung, also außerhalb der oben angesprochenen Referenzstrukturen - der Körperschall verändert. Bei einem kurzzeitigen Einsatz des Werkzeugs, wie das beim Einlernen der Korrelation zwischen Körperschall und Schnitttiefe der Fall ist, kann in der Regel davon ausgegangen werden, dass keine besondere Veränderung des Werkzeuges erfolgt und ein entsprechender Einfluss auf die Korrelation ausgeschlossen werden kann. Bei länger andauernden Einsätzen hingegen kann sich ein Effekt der Werkzeugveränderung auf die Körperschallerzeugung ergeben, welche ebenfalls, insbesondere bei Einsatz der künstlichen Intelligenz, insbesondere mittels eines neuronalen Netzwerkes, festgestellt werden kann. Hierzu kann das System der künstlichen Intelligenz verwendet werden, welches auch für die Regelung der Zustellung zuständig ist. Aus der festgestellten Korrelation zwischen Zustand des Werkzeugs und dem Körperschall kann zum Beispiel auf die zu erwartende restliche Lebenszeit des Werkzeugs geschlossen werden, so dass rechtzeitig vor einem möglichen Schadensfall das Werkzeug ausgetauscht werden kann. Auch kann anhand des Körperschalls ein plötzlich auftretender kritischer Schaden, zum Beispiel ein Bruch des Werkzeuges, festgestellt werden in diesem Fall kann der Fertigungsprozess unmittelbar nach Feststellung des Schadens unterbrochen werden.

Im Folgenden werden anhand von Figuren Ausführungsformen der erfindungsgemäßen Verfahren sowie eine beispielhafte Ausführungsform der erfindungsgemäßen Bearbeitungsmaschine dargestellt.

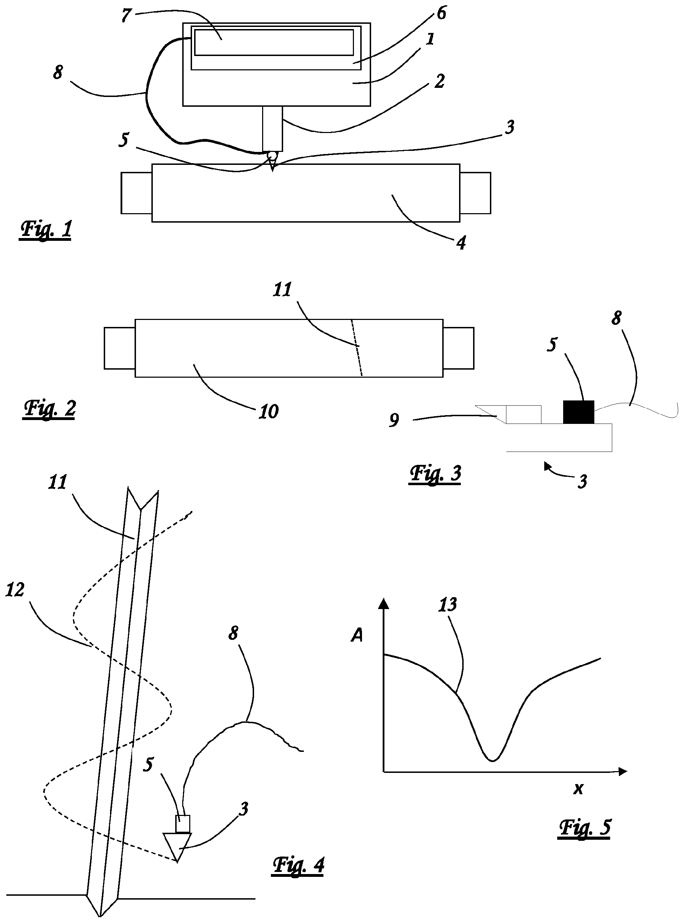

Fig. 1 zeigt schematisch stark vereinfacht und nicht maßstäblich Teile einer Bearbeitungsmaschine, nämlich eine Zustellungseinheit 1 mit einem ein Werkzeug 3 haltenden Werkzeughalter 2. Das Werkzeug 3 ist in Fig. 3 schematisch und vergrößert dargestellt. Mit dem eine Diamantspitze 9 aufweisenden Werkzeug 3 werden in eine Oberfläche eines walzenförmigen Werkstückes 4 hier nicht dargestellte Strukturen im Submikrometerbereich spanabhebend eingearbeitet, die zum Beispiel für optische Anwendungen vorgesehen sind, zum Beispiel für diffraktive optische Elemente. Andere beispielhafte Anwendungsbereiche sind die Plasmonik oder die Herstellung biologischer Strukturen, zum Beispiel hydrophobe Oberflächen. Das Werkstück 4 wird hierfür relativ zum Werkzeug 3 gedreht und in bei Bedarf in Längsrichtung verfahren. Alternativ können auch andere Werkstückformen bearbeitet werden, zum Beispiel Werkstücke mit einer ebenen Oberfläche.

Die Diamantspitze 9 kann eine Restverrundung von zum Beispiel 20 nm aufweisen und einen Öffnungswinkel von 45°. Andere Werte für die Verrundung oder den Öffnungswinkel, zum Beispiel aus dem weiter oben genannten Bereich, können ebenfalls eingesetzt werden. Werkzeugen, welche aus einem anderen Material hergestellt sind oder eine andere, von einer Spitze abweichenden Schneidengeometrie aufweisen, sind auch denkbar.

Für die Bearbeitung wird vorgesehen, die Zustellung des Werkzeugs 3 zum Werkstück 4 unter Nutzung von Körperschallsignalen, welche während der spanabhebenden Bearbeitung entstehen, zu regeln. Zur Aufnahme der Körperschallsignale wird am Werkzeug 3 ein Schallsensor 5, z.B. in Form eines passiv piezoelektrischen AE-Sensors angebracht, zum Beispiel mittels eines Klebstoffes.

Eine Regeleinheit 6 der Bearbeitungsmaschine umfasst ein neuronales Netzwerk 7, welches eingerichtet ist, eine Korrelation zwischen festgestellten Sensorausgangssignalen des Schallsensors 5 und einer durch die Zustellung des Werkzeugs 3 definierte Schnitttiefe zu erlernen. Für die hier gegebene beispielhafte Darstellung soll der Begriff der Sensorausgangssignale auch solche Zwischensignale umfassen, welche durch Verarbeitung der eigentlichen Ausgangssignale des Schallsensors 5 generiert werden.

Für das Erlernen der Korrelation wird zunächst ein erster Bereich des Werkstückes 4 bearbeitet, wobei die Körperschallsignale über eine Signalleitung 8 registriert werden. Anschließend werden die mit dieser Bearbeitung hergestellten Schnitttiefen gemessen und den registrierten Körperschallsignalen zugeordnet. Ein solcher Lernprozess kann in relativ kurzer Zeit, zum Beispiel innerhalb einer Minute, abgeschlossen sein.

Anschließend beginnt die produktive Bearbeitung der Werkstückoberfläche, wobei die Zustellung des Werkzeuges 3 zum Werkstück 4 unter Einsatz der mit der Regeleinheit 6, auch neuronaler Regler genannt, erlernten Korrelation geregelt wird. Da die Zustellung des Werkzeugs 3 zum Werkstück 4 direkt die Schnitttiefe definiert, ist auch die absolute Geometrie in der gefertigten Struktur auf der Werkstückoberfläche bekannt.

Die Fig. 2 bis 5 erläutern das Verfahren zur Bestimmung der Lage und/oder der Geometrie des Werkzeuges 2. In ein Referenzwerkstück 10, welches mit dem Werkstück 4 identisch sein kann, wird mittels eines hier nicht dargestellten Referenzwerkzeuges eine Referenzstruktur 11 eingearbeitet, welche beispielhaft eine V-förmige Nut und in Fig. 4 vergrößert wiedergegeben ist. Mit dem Werkzeug 3, in Fig. 4 wieder nur schematisch durch ein Dreieck symbolisiert und welches den Schallsensor 5 trägt, wird eine pendelförmige Bahn 12 entlang der Referenzstruktur 11 verfahren. Das beim Kreuzen der Referenzstruktur 11 vom Schallsensor 5 weitergegebene Sensorausgangssignal 13 in Form einer Amplitude A ist in einem Diagramm in Fig. 5 in Abhängigkeit vom Weg x schematisch dargestellt. Hierdurch werden die Körperschalldaten mit den Achsdaten korreliert.

Die Auswertung des Körperschallsignals kann analog zur Auswertung der Schallsignale bei der Zustellung erfolgen. Nach Einreglung der korrekten Position des Werkzeuges 3, alternativ durch analytische Bestimmung des Verlaufs der Schallamplitude, kann ein festgestellter Offset als Parameter zum Einmessen in der Steuerung hinterlegt werden.

### Bezugszeichenliste

- 1: Zustellungseinheit
- 2: Werkzeughalter
- 3: Werkzeug
- 4: Werkstück
- 5: Schallsensor
- 6: Regeleinheit
- 7: Neuronales Netzwerk
- 8: Signalleitung
- 9: Diamantspitze
- 10: Referenzwerkstück
- 11: Referenzstruktur
- 12: Bahn
- 13: Sensorausgangssignal

## Patentansprüche

1. Verfahren zur spanabhebenden Fertigung von Strukturen auf Werkstückoberflächen, bei dem
während eines an einem Werkstück (4) durchgeführten Zerspanungsprozesses entstehender Körperschall mittels mindestens eines Schallsensors (5) gemessen wird und
Sensorausgangssignale des mindestens einen Schallsensors für eine Regelung der Zustellung eines Werkzeuges (3) am Werkstück (4) genutzt werden.

2. Verfahren zur spanabhebenden Fertigung von Strukturen auf Werkstückoberflächen, bei dem
zur Bestimmung einer Lage und/oder der Geometrie eines Werkzeuges (3) das Werkzeug (3) derart entlang einer von einem Referenzwerkzeug in einem Referenzwerkstück (10) erzeugten Referenzstruktur (11) verfahren wird, dass das Werkzeug (3) auf die Referenzstruktur (11) lateral begrenzendes Material spanabhebend einwirkt,
ein während des Verfahrens des Werkzeuges (3) entstehender Körperschall mittels mindestens eines Schallsensors (5) gemessen wird und
unter Nutzung von Sensorausgangssignalen die Lage des Werkzeugs (3) relativ zur Referenzstruktur (11) festgestellt wird.

3. Verfahren nach Anspruch 2, **dadurch gekennzeichnet, dass** das Werkzeug (3) pendelnd entlang der Referenzstruktur (11) verfahren wird.

4. Verfahren nach Anspruch 1, **dadurch gekennzeichnet, dass** der Schallsensor (5) oder mindestens einer der Schallsensoren (5) am Werkzeug (3) angebracht wird.

5. Verfahren nach einem der vorhergehenden Ansprüche, **dadurch gekennzeichnet, dass** für die Regelung der Werkzeugzustellung zur Ermittlung einer Korrelation zwischen den Sensorausgangssignalen oder aus den
Sensorausgangssignalen generierten Zwischensignalen und einer Schnitttiefe des Werkzeuges (3) am Werkstück (5) künstliche Intelligenz eingesetzt wird.

6. Verfahren nach Anspruch 5, **dadurch gekennzeichnet, dass** für die künstliche Intelligenz eine Regeleinheit (6) mit neuronalem Netzwerk eingesetzt wird.

7. Verfahren nach einem der vorhergehenden Ansprüche, **dadurch gekennzeichnet, dass** das Werkzeug (3) eine Bearbeitungsspitze (9) oder eine definierte Schneide aus Diamantmaterial aufweist.

8. Verfahren nach einem der vorhergehenden Ansprüche, **dadurch gekennzeichnet, dass** eine Korrelation zwischen den Sensorausgangssignalen oder aus den Sensorausgangssignalen generierten Zwischensignalen und einem einen Zustand des Werkzeuges (3) definierenden Parameter ermittelt wird.

9. Bearbeitungsmaschine, umfassend
Mittel zur Zustellung eines spanabhebenden Werkzeuges (3) zu einem Werkstück (4), eine Regeleinheit (6) zur Regelung der Zustellung und
mindestens einen Schallsensor (5) zur Erfassung des bei einem spanabhebenden Eingriff entstehenden Körperschalls,
**dadurch gekennzeichnet, dass**
die Bearbeitungsmaschine zur Durchführung des Verfahrens nach einem der Ansprüche 1 bis 8 eingerichtet ist.
